(19) Europäisches Patentamt
European Patent Office
Office européen des brevets

(11) **EP 2 699 961 B1**

(12) **EUROPEAN PATENT SPECIFICATION**

(45) Date of publication and mention
of the grant of the patent:
**06.06.2018 Bulletin 2018/23**

(51) Int Cl.:
***G02F 1/163*** *(2006.01)* ***E06B 9/24*** *(2006.01)*

(21) Application number: **12717939.8**

(22) Date of filing: **02.04.2012**

(86) International application number:
**PCT/US2012/031857**

(87) International publication number:
**WO 2012/145155 (26.10.2012 Gazette 2012/43)**

(54) **SYSTEM FOR CONTROLLING ELECTROCHROMIC GLAZINGS BASED ON IDENTIFIERS**

SYSTEM ZUR STEUERUNG ELEKTROCHROMER VERGLASUNGEN AUF DER BASIS VON IDENTIFIKATOREN

SYSTÈME POUR COMMANDER DES VITRAGES ÉLECTROCHROMIQUES SUR LA BASE D'IDENTIFIANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011 US 201161477245 P**

(43) Date of publication of application:
**26.02.2014 Bulletin 2014/09**

(73) Proprietor: **Sage Electrochromics, Inc.
Faribault, MN 55021 (US)**

(72) Inventors:
• **GREER, Bryan, D.
Northfield, MN 55057 (US)**
• **SNYKER, Mark, O.
Apple Valley, MN 55124-7046 (US)**
• **LANPHEAR, John
Northfield, MN 55057 (US)**
• **LIEBL, Troy
Owatonna, MN 55060 (US)**

(74) Representative: **Zimmermann & Partner
Patentanwälte mbB
Postfach 330 920
80069 München (DE)**

(56) References cited:
**EP-A1- 2 161 615     WO-A1-03/096115
WO-A2-02/09338**

**Description**

BACKGROUND OF THE INVENTION

Electrochromic glazings include electrochromic materials that are known to change their optical properties, such as coloration, in response to the application of an electrical potential, thereby making the device more or less transparent or more or less reflective. Typical prior art electrochromic devices (hereinafter "EC devices") include a counter electrode layer, an electrochromic material layer which is deposited substantially parallel to the counter electrode layer, and an ionically conductive layer separating the counter electrode layer from the electrochromic layer respectively. In addition, two transparent conductive layers are substantially parallel to and in contact with the counter electrode layer and the electrochromic layer. Materials for making the counter electrode layer, the electrochromic material layer, the ionically conductive layer and the conductive layers are known and described, for example, in United States Patent Publication No. 2008/0169185, incorporated by reference herein, and desirably are substantially transparent oxides or nitrides.

When an electrical potential is applied across the layered structure of the EC device, such as by connecting the respective conductive layers to a low voltage electrical source, ions, such as Li+ ions stored in the counter electrode layer, flow from the counter electrode layer, through the ion conductor layer and to the electrochromic layer. In addition, electrons flow from the counter electrode layer, around an external circuit including a low voltage electrical source, to the electrochromic layer so as to maintain charge neutrality in the counter electrode layer and the electrochromic layer. The transfer of ions and electrons to the electrochromic layer causes the optical characteristics of the electrochromic layer, and optionally the counter electrode layer in a complementary EC device, to change, thereby changing the coloration and, thus, the transparency of the EC device.

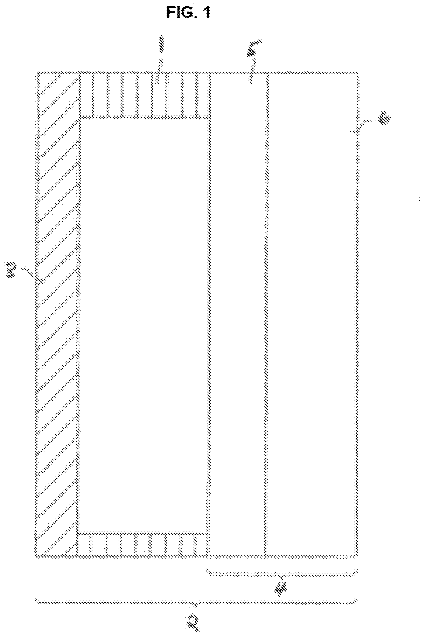

Traditional EC devices and the insulated glass units (hereinafter "IGUs") comprising them have the structure shown in FIG. 1. As used herein, the term "insulated glass unit" means two or more layers of glass separated by a spacer 1 along the edge and sealed to create a dead air space (or other gas, e.g. argon, nitrogen, krypton) between the layers. The IGU 2 comprises an interior glass panel 3 and an EC device 4 (the EC device itself is comprised of a stack of thin films 5 and a substrate onto which the thin films are deposited 6).

Many different EC devices, or the IGUs comprising them may be installed throughout a building, or even in a single room, and controlled by a control system (the control system may be in the room with the EC devices or centrally located in the building or even tied to HVAC or other controls). For example, the different EC devices may have different applied thin films, different exterior coatings or tints, and/or different sizes and/or shapes with one or more independently-controlled segments per device. Also varying are properties such as color and transmissivity in clear or fully dark states, overall conductivity, and performance over temperature. Because of these differences, the control protocol may vary between the differing electrochromic devices. For example, a 0.5m square device may be tinted at a maximum of 3.0V and 150 mA, while 1.0 meter square device might require 4.0V and 600 mA. Or, a device with a very large dynamic range will need to be switched longer at the same voltage and current in order to reach a fully tinted state. As such, different control algorithms are typically applied to different electrochromic device panels or IGUs.

Generally, the electrochromic devices are each connected independently to a controller or interface panel via a communication wire or cable. FIG. 1 depicts an embodiment where several panels are connected to a controller or interface panel. In this embodiment, the controllers or interface panels are further connected to each other and to user interfaces (wall-mounted switches). In some embodiments the controllers could be further connected to a central building management system.

Traditionally, a specific cable from the electrochromic device must interface the control system at a specific point at which a predetermined voltage or current is applied corresponding to the electrochromic device attached thereto. Because of the number of connections interfacing each controller or interface panel, it can be difficult to keep track of which cable goes to each electrochromic device. If installation is done incorrectly, e.g. attaching the wrong cable to the wrong point in the control system, an incorrect voltage or current may be applied which, consequently, would affect control performance or compromise the longevity of the electrochromic device.

Another problem with this control configuration is that the electrical resistance of the long wires connecting IGUs to control circuitry results in significantly lower voltage at the EC device or IGU than at the controls. The control system needs to compensate for this voltage difference in order to optimally control the EC or IGU. This is frequently done by using one or two extra wires to sense the voltage difference, but this adds cost and installation complexity.

EP 2161615 A1 discloses a system for switching of an electrochromic device, the system comprising an electrochromic device and a controller, wherein various parameters corresponding to the electrochromic device are saved in the memory of the controller. The features of the preamble of the independent claims are known from this document.

SUMMARY OF THE INVENTION

In one aspect, the present invention is a system for modulating the transmission of light comprising an electrochromic glazing and an identification circuit which stores information regarding at least some of the properties of the electrochromic device or its control requirements; and a control system configured to access the information stored in the identification circuit and to use the accessed information to apply an appropriate voltage and/or current to the electrochromic device. The identification circuit is in bidirectional communication with the control system.

In one embodiment, the information stored by the identification circuit is a physical property of the electrochromic glazing. In one embodiment, the physical property is a product model number, a product serial number, a manufacturing date, a glazing shape, a glazing size, a glazing surface area, glazing constituent materials, a number and size of independently-controllable glazing segments, glazing installation location, and other physical properties.

In one embodiment, the information stored by the identification circuit is an operational property selected from the group consisting of a voltage or current.

In one embodiment, the information stored by the identification circuit is a switching voltage. In one embodiment, the information stored by the identification circuit is a tinting current. In one embodiment, the information stored by the identification circuit is a clearing current. In one embodiment, the information stored by the identification circuit is a leakage current. In one embodiment, the information stored by the identification circuit is a switching speed.

In one embodiment, the information stored by the identification circuit is selected from the group consisting of internal series resistance, control parameters, electrical properties, and minimum and maximum tint levels, with or without corresponding holding voltages.

According to the present invention, the identification circuit is in bidirectional communication with the controller. In one embodiment, the control system is capable of self-configuring the electrochromic glazing. In one embodiment, the identification circuit is configured to monitor a voltage of the electrochromic glazing. In one embodiment, the control system is configured to calculate a wire resistance from the monitored voltage.

In one embodiment, the identification circuit is configured to measure a temperature. In one embodiment, the identification circuit is configured to measure light levels or transmissivity levels. In one embodiment, the identification circuit comprises a microcontroller. In one embodiment, the identification circuit shares wires with the electrochromic glazing and the control system is configured to send information to the identification circuit by modulating a waveform.

In one embodiment, the identification circuit is embedded in an electrical connector. In one embodiment, the identification circuit is embedded in an outer seal of the electrochromic glazing. In one embodiment, the identification circuit is directly attached to at least one bus bar of the electrochromic glazing.

In another aspect, the present invention is a method of controlling an electrochromic glazing of an electrochromic device comprising an electrochromic glazing and an identification circuit which stores information regarding at least some of the properties of the electrochromic device or its control requirements. The identification circuit is in bidirectional communication with the control system. The method comprises a control system accessing the information stored in the identification circuit of the electrochromic device; and using the accessed information to apply an appropriate voltage and/or current to the electrochromic device.

In one embodiment, the method further comprises: (a) setting the electrochromic glazing to a clear state; (b) applying a predetermined voltage to the electrochromic glazing; (c) measuring an actual voltage applied to the electrochromic glazing; (d) calculating a wire resistance of the system; and (e) adjusting the predetermined voltage based on the calculated wire resistance. In one embodiment, the actual voltage is measured by the identification circuit. In one embodiment, the identification circuit transmits stored parameters to the control system. In one embodiment, the wire resistance and the stored parameters are stored in a memory of the control system.

In one embodiment, the method further comprises configuring the control system in response to the information accessed from the identification circuit.

BRIEF DESCRIPTION OF THE DRAWINGS

FIG. 1 is a schematic view of an IGU comprising an EC device.

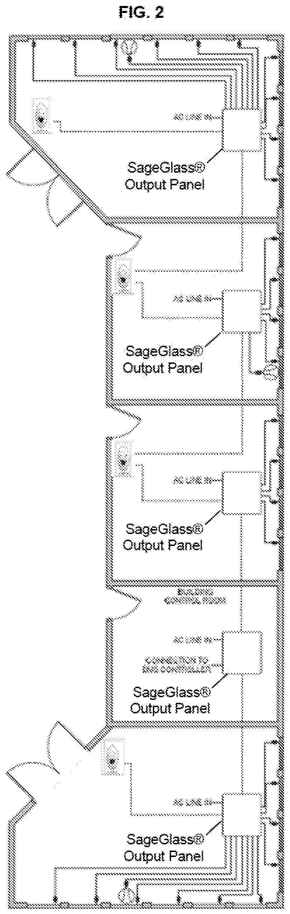

FIG. 2 is a schematic showing connections between individual electrochromic device panels and a central control system or interface panel are depicted.
FIG. 3 is a schematic of an identification circuit.
FIG. 4 is a schematic of an embedded identification circuit.
FIG. 5 is a schematic of a bus bar "in-line" with an identification circuit.

DETAILED DESCRIPTION

According to the present invention, an EC device or IGU comprises an identification circuit which stores information regarding at least some of the properties of the EC device or its control requirements.

In some embodiments, the identification circuit stores one or more of the following parameters or identifiers: (a) product model and serial number; (b) manufacturing date; (c) device shape; (d) device size; (e) device surface area; (f) control parameters including, e.g., maximum switching voltage and/or current for tinting and/or clearing; (g) properties including leakage current and/or switching speed; (h) installation location; (i) constituent materials; (j) number and size of independently-controllable segments; (k) minimum and maximum tint levels and corresponding holding voltages; (l) internal series resistance; and (m) any other physical or operational parameters necessary for appropriate control.

The EC device comprising the identification circuit is in communication with one or more control systems. The control system is configured to access the information stored in the identification circuit and to use the information stored in the identification circuit

to apply an appropriate voltage and/or current to the EC device, and to accurately control its tint level. As such, the control system is capable of "self-configuring" and thus eliminate or reduce the possibility of errors, including the application of the wrong voltage or current to the device. Moreover, it is believed that such a system can be used to simplify the installation process (e.g. a bundle of wires may lead from the control system and may be randomly assigned to any EC device having an identification circuit).

In another embodiment, the identification circuit is used to measure the voltage at the EC device or the IGU and transmit that information to the control system. As a result of this, the wire resistance may be calculated and the control system could use this information to compensate for wire resistance without using additional or unnecessary wiring.

In another embodiment, the identification circuit may take additional measurements such as temperature or light levels and transmit that data to the controller as well.

In one embodiment, the information is initially loaded onto the identification circuit at the time of manufacture, when the identification circuit is attached, or shortly thereafter. The information may also be loaded after installation or may be updated during the life of the device.

In order to load the information, the IGU is connected through its normal electrical connector to a programming circuit which may be a regular IGU control circuit, or something specially designed for this purpose. This circuit first powers the IGU with a precisely-controlled voltage, and then sends a signal indicating that the identification circuit should measure the applied voltage and store a calibration reference in its non-volatile memory (e.g., EEPROM). The programming circuit then, in communication with the factory control software which manages the manufacturing process and therefore has stored information regarding all size and process information about the device, transmits all the relevant information. The identification circuit then stores this data in non-volatile memory. When this is done, the programming circuit sends a signal causing the identification circuit to transmit back all the saved memory in order to verify correct programming. If verification fails, the data may be sent again.

The control system may be connected to the EC device or IGU in different ways. In one embodiment, one or more extra wires (in addition to those required to power the EC device/IGU) are run for communication between the control system and the EC device/IGU. This wire(s) would be used for relaying information from the identification circuit to the control system. A ground reference for the communication could either be one of the extra wires, or shared with the EC device/IGU wires.

In another embodiment, no extra wires are run. The standard electrochromic wiring configuration would be capable of bidirectional communication and allow for both powering of the EC device/IGU and relaying of the information stored in the identification circuit.

According to the invention, the controller and the identification circuit are in bidirectional communication, *i.e.* the controller sends information to the identification circuit and the identification circuit sends information to the controller.

In some embodiments in which the ID shares wires with the EC device, the controller sends information to the identification circuit by turning the applied EC voltage "off" and "on" to send a signal. In some embodiments, this occurs at a rate of about 100 to about 1000 bits per second. The data sent can be represented multiple ways. For example, the data may be sent in serial digital form by turning off the EC voltage to represent a 0 bit, and turning it on to represent a 1 bit. Alternatively, the data may be represented by turning the voltage on and off at a fixed or variable frequency, but by modulating the resulting waveform by (a) amplitude keying; (b) frequency shift keying; or (c) phase shift keying, or any other modulation methods known in the art.

In some embodiments, the identification circuit sends information, including saved data and measured voltage, to the controls by changing the current load, preferably at a rate of about 100 to about 1000 Hz. This current may represent data in all the same ways as the data sent from the control system to the identification circuit, including binary on/off, amplitude keying, frequency- or phase-shift keying. In general, the change in current ranges from about 1 to about 10 mA for robust communication without wasting unnecessary power. Because an EC glass control system typically includes means to apply voltage and measure current, this communication method has the advantage of requiring no additional circuitry in the control hardware apart from the ID circuit itself.

In some embodiments, the ID circuit uses FSK modulation, with two frequencies typically between 200 Hz and 1000 Hz, to represent the digital values 0 and 1. The data is encoded in 8-bit packets with start and stop bits, and transmitted at a slow rate, typically between 5 and 50 bits per second. This modulation may be done in software, or in modulator hardware included in the microcontroller. The connected control circuit implements, in software, for example, a Goertzel algorithm to distinguish the two frequencies and create a digital stream of 0s and 1s from which the original 8-bit packet may be reconstructed.

Any existing controllers known in the art may be used in conjunction with the EC devices or IGUs comprising the identification circuitry. In some embodiments, the software contained in the controller may need to be updated to send inquires and receive data to the identification circuitry.

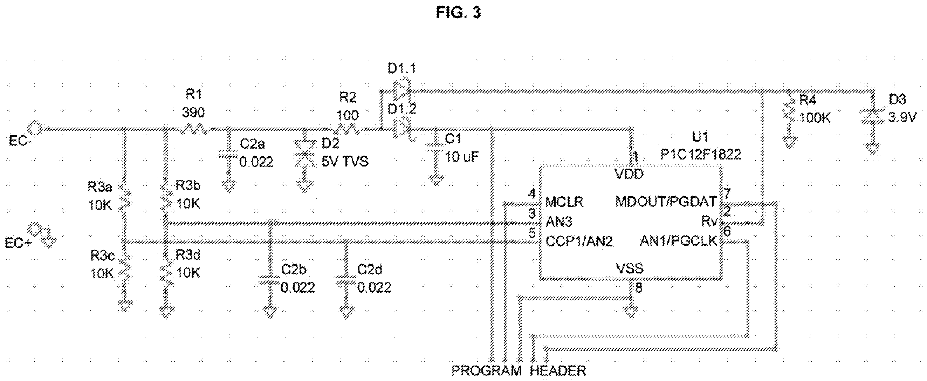

FIG. 3 provides an example of a identification circuit which may be included in an EC device. U1 refers to a microcontroller with EEPROM (electrically erasable, programmable read-only memory) which can be programmed through the five connections labeled "program header". One example of a suitable microcontroller is a PIC12F1822 made by Microchip, Inc. One skilled in the art would recognize that any other low-power, miniature microcontroller could be used in accordance with the present invention. The connections labeled "EC-" and "EC+" are connected to the negative and positive EC device wires, respectively.

D2 is an optional transient-protection diode which works along with capacitor C2a to protect the microprocessor from electrostatic discharge or lightning-induced surges. C1 holds charge to keep the microprocessor powered during data reception, during which the supplied voltage can drop to zero, with D1.2 preventing C1 from discharging into the EC wires.

D3 optionally provides protection against excess voltage damaging the microprocessor.

To modulate the current draw, the microprocessor can toggle pin 2 (labeled "Rx"). When Rx is high, no current flows through D1.1. When Rx is low (about 0V), about a few milliamps of current will flow into the pin, causing a detectable change in current at the control circuit. The amount of current flowing depends on R1 and R2. With the values shown (390 and 100 ohms), about 6mA will flow with about 3V applied to the EC wires. The ID circuit shown here can provide the added benefit of accurately measuring the applied voltage. Resistor networks R3a/R3c and R3b/R3d supply redundant measurements of half the applied voltage to the input pins labeled AN3 and AN2 on the microprocessor, which are able to measure voltage level. C2b and C2c provide low-pass filtering, creating a more stable and accurate measurement.

Other variations and modifications of this circuit will be obvious to those skilled in the art. For example, ferrite beads may be added to the input wires to limit radiated emissions and help protect against electrostatic discharge (ESD) events. Or R1, which absorbs most of the energy from an ESD event, may be replaced with multiple smaller resistors in series (for example, four 100-ohm resistor) to reduce the risk of failure.

Resistors R1 and R3a-R3d are preferably of the thin-film type. This type of resistor, if it fails, tends to fail by increasing in resistance or becoming an open circuit. This is important, because is any of these components failed to a reduced resistance or short-circuit, the additional current draw could compromise reliable control of the electrochromic device or IGU. In this embodiment, a failure of these resistors can result in the circuit failing to function, but not in the inability to control the glass.

The voltage measurement can be transmitted back to the controller. This information can be used to calculate and/or compensate for the resistance of the connecting wires, as follows:

$$\text{Wire resistance} = [(\text{applied voltage}) - (\text{voltage at IGU})] / (\text{measured current})$$

This wire resistance, in some embodiments, is then stored in non-volatile memory in the EC control system, and can be used to calculate the voltage at the IGU at any time, as follows, in conjunction with the voltage and current measured at the control system:

$$\text{Voltage at IGU} = \text{applied voltage} - (\text{measured current}) * (\text{wire resistance})$$

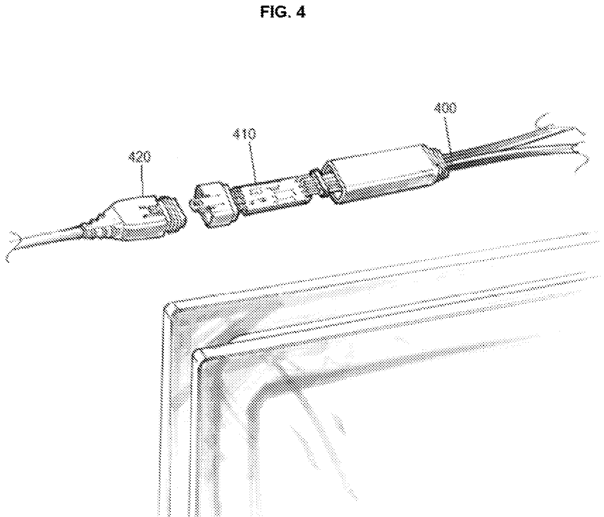

The identification circuit may be located in any part of the EC device or corresponding IGU where it can readily be connected to IGU wires. In some embodiments, the identification circuit is embedded in the electrical connector, where the connections are believed to be easily available, such as depicted in FIG. 4. In some embodiments, the electronic circuit is molded into the connector, thoroughly protecting it from moisture or damage. In these embodiments the embedded identification circuit comprises a wire 400, an identification circuit PCIB 410, and an environmental seal 420.

In other embodiments, the identification circuit is embedded in the outer seal area of the IGU with attached wires being soldered onto the electrochromic device in the same manner and/or location that the electrical connector or cable is normally attached. Alternatively, the identification circuit may be built on a flexible circuit board which connects directly, without additional wires, to the electrochromic device.

In yet other embodiments, the identification circuit is embedded inside the sealed area of the IGU, with connections to bus bars via wires.

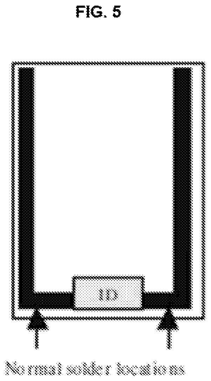

In yet other embodiments, the identification circuit is directly attached to the bus bars. In this embodiment, additional bus bar material is deposited (either inside or outside the IGU seal area) close to the existing bus bars and the identification circuit may be directly attached to the two bus bars. Normal wire attachment would then take place where it commonly does as depicted in FIG. 5. In this embodiment, the identification circuit is constructed on a thin circuit board substrate (such as a flexible circuit comprised of copper conductors on a polyimide or polyester substrate) with holes surrounded by exposed copper. It is believed that it is possible to lay the identification circuit on the bus bar and solder it to them (from above) using soldering methods known in the art. Alternatively, the identification circuit can be adhered to the bus bars with a conductive adhesive.

Example: Consider a control system comprised of a single control panel and two electrochromic IGUs having the properties, described in the table below:

| ID | Length (m) | Height (m) | Tinting | | Clearing | |
|---|---|---|---|---|---|---|
| | | | Volts | Amps | Volts | Amps |
| 102561 | 0.5 | 0.5 | 3.0 | 0.15 | 2.0 | 0.2 |
| 125403 | 1 | 1 | 4 | 0.6 | 3.0 | 0.8 |

When the EC control system is first powered up, the IGU is put into a clear state or near clear state. Once in the clear state, a voltage is applied to each IGU sufficient to turn on the identification circuits. A signal is transmitted to determine the presence of an identification circuit. If no identification circuit is found, the applied voltage is increased slightly, and another signal is transmitted. This process is repeated until either the identification circuit is found, or a maximum voltage is reached, indicating that there is not an identification circuit present. The higher voltage is required in some cases to accommodate line loss due to wire resistance.

Next, wire resistance is determined. The EC control system sets the IGU to the previously determined voltages, and then sends a signal requesting voltage data. Wire resistance is then calculated as described previously.

Once the wire resistance is found, a more controlled voltage is applied to the IGU, and a signal is sent requesting IGU configuration information. When this information is received and validated, it is saved in non-volatile memory in the EC control system. The system is now fully ready to operate.

Where other devices are connected to an electrochromic glass control system (e.g., optical sensors, occupancy sensors or security sensors), or other type of control system, the same identification circuit concepts may be applied to inexpensively identify the attached object to the control system. If this is done with sensors, it would be possible for the voltage measurement circuit to be applied to the sensor output rather than the incoming voltage. If this is done, it would be possible to return sensor data to the control system over the power wires, without requiring an extra signal wire, reducing the sensor from a 3-wire cable to a 2-wire one.

**Claims**

1.  A system for modulating the transmission of light, the system comprising:

    an electrochromic device comprising an electrochromic glazing and an identification circuit which stores information regarding at least some of the properties of the electrochromic device or its control requirements; and
    a control system configured to access the information stored in the identification circuit and to use the accessed information to apply an appropriate voltage and/or current to the electrochromic device,
    **characterized in that** the identification circuit is in bidirectional communication with said control system.

2.  The system of claim 1, wherein the information stored by the identification circuit is a physical property of said electrochromic glazing.

3.  The system of claim 1, wherein the information stored by the identification circuit is a product model number, a product serial number, a manufacturing date, a glazing shape, a glazing size, a glazing surface area, glazing constituent materials, a number and size of independently-controllable glazing segments, or a glazing installation location.

4. The system of claim 1, wherein the information stored by the identification circuit is an operational property selected from the group consisting of a voltage or current.

5. The system of claim 1, wherein the information stored by the identification circuit is a switching voltage, a tinting current, a clearing current, a leakage current, a switching speed, or is selected from the group consisting of internal series resistance, control parameters, electrical properties, and minimum and maximum tint levels with corresponding holding voltages.

6. The system of claim 1, wherein said identification circuit is configured to monitor a voltage of said electrochromic glazing or to measure a temperature, or to measure light levels.

7. The system of claim 1, wherein said identification circuit is configured to monitor a voltage of said electrochromic glazing and said control system is configured to calculate a wire resistance from said monitored voltage.

8. The system of claim 1, wherein said identification circuit comprises a microcontroller.

9. The system of claim 1, wherein said identification circuit shares wires with said electrochromic glazing and wherein said control system is configured to send information to said identification circuit by modulating said applied voltage.

10. The system of claim 1, wherein said identification circuit is embedded in an electrical connector or is embedded in an outer seal of said electrochromic glazing or is directly attached to at least one bus bar of said electrochromic glazing.

11. A method of controlling an electrochromic glazing of an electrochromic device comprising an electrochromic glazing and an identification circuit which stores information regarding at least some of the properties of the electrochromic device or its control requirements, the method comprising a control system:

accessing the information stored in the identification circuit of the electrochromic device; and
using the accessed information to apply an appropriate voltage and/or current to the electrochromic device, **characterized in that** the identification circuit is in bidirectional communication with said control system.

12. The method of claim 11, further comprising: (a) setting said electrochromic glazing to a clear state; (b) applying a predetermined voltage to said electrochromic glazing; (c) measuring an actual voltage applied to said electrochromic glazing; (d) calculating a wire resistance of said system; and (e) adjusting subsequently applied voltages based on said calculated wire resistance.

13. The method of claim 12, wherein at least one of:

said actual voltage is measured by said identification circuit;
said identification circuit transmits stored parameters to said control system and said wire resistance and said stored parameters are stored in a memory of said control system.

14. The method of claim 11, further comprising configuring the control system in response to the information accessed from the identification circuit.

**Patentansprüche**

1. System zum Modulieren der Übertragung von Licht, wobei das System umfasst:

eine elektrochrome Einrichtung, die eine elektrochrome Verglasung und eine Identifikationsschaltung umfasst, die Informationen bezüglich mindestens einiger der Eigenschaften der elektrochromen Einrichtung oder ihrer Steuervoraussetzungen speichert; und
ein Steuersystem, das dazu ausgelegt ist, die in der Identifikationsschaltung gespeicherten Informationen abzurufen und die abgerufenen Informationen zu verwenden, um eine angemessene Spannung und/oder einen angemessenen Strom an die elektrochrome Einrichtung anzulegen,
**dadurch gekennzeichnet, dass** die Identifikationsschaltung in bidirektionaler Kommunikation mit dem Steuersystem steht.

2. System nach Anspruch 1, wobei es sich bei den von der Identifikationsschaltung gespeicherten Informationen um eine physikalische Eigenschaft der elektrochromen Verglasung handelt.

3. System nach Anspruch 1, wobei es sich bei den von der Identifikationsschaltung gespeicherten Informationen um eine Produktmodellnummer, eine Produktseriennummer, ein Herstellungsdatum, eine Verglasungsform, eine Verglasungsgröße, eine Verglasungsoberfläche, Verglasungsmaterialien, eine Anzahl und Größe unabhängig steuerbarer Verglasungssegmente oder einen Verglasungsinstallationsort handelt.

4. System nach Anspruch 1, wobei es sich bei den von der Identifikationsschaltung gespeicherten Informationen um eine betriebliche Eigenschaft der elektrochromen Verglasung handelt, ausgewählt aus der Gruppe bestehend aus einer Spannung oder Strom.

5. System nach Anspruch 1, wobei es sich bei den von der Identifikationsschaltung gespeicherten Informationen um eine Schaltspannung, einen Abtönstrom, einen Aufhellstrom, einen Kriechstrom, eine Schaltgeschwindigkeit handelt, oder sie aus der Gruppe bestehend aus Serieninnenwiderständen, Steuerparametern, elektrischen Eigenschaften und minimalen und maximalen Abtönstufen mit entsprechenden Haltespannungen ausgewählt sind.

6. System nach Anspruch 1, wobei die Identifikationsschaltung dazu ausgelegt ist, eine Spannung der elektrochromen Verglasung zu überwachen, eine Temperatur zu messen, oder den Helligkeitsgrad zu messen.

7. System nach Anspruch 1, wobei die Identifikationsschaltung dazu ausgelegt ist, eine Spannung der elektrochromen Verglasung zu überwachen, und das Steuersystem dazu ausgelegt ist, einen Drahtwiderstand aus der überwachten Spannung zu berechnen.

8. System nach Anspruch 1, wobei die Identifikationsschaltung einen Mikrokontroller umfasst.

9. System nach Anspruch 1, wobei die Identifikationsschaltung Drähte mit der elektrochromen Verglasung teilt und wobei das Steuersystem dazu ausgelegt ist, Informationen durch Modulieren der angelegten Spannung an die Identifikationsschaltung zu senden.

10. System nach Anspruch 1, wobei die Identifikationsschaltung in einen elektrischen Anschluss eingebettet ist oder in eine äußere Dichtung der elektrochromen Verglasung eingebettet ist oder direkt an mindestens einer Stromschiene der elektrochromen Verglasung angebracht ist.

11. Verfahren zum Steuern einer elektrochromen Verglasung einer elektrochromen Einrichtung, die eine elektrochrome Verglasung und eine Identifikationsschaltung umfasst, die Informationen bezüglich mindestens einiger der Eigenschaften der elektrochromen Einrichtung oder ihrer Steuervoraussetzungen speichert, wobei das Verfahren umfasst, dass ein Steuersystem:

die in der Identifikationsschaltung der elektrochromen Einrichtung gespeicherten Informationen abruft; und die abgerufenen Informationen verwendet, um eine angemessene Spannung und/oder einen angemessenen Strom an die elektrochrome Einrichtung anzulegen, **dadurch gekennzeichnet, dass** die Identifikationsschaltung in bidirektionaler Kommunikation mit dem Steuersystem steht.

12. Verfahren nach Anspruch 11, wobei das Verfahren ferner umfasst: (a) Einstellen der elektrochromen Verglasung auf einen hellen Zustand; (b) Anlegen einer vorbestimmten Spannung an die elektrochrome Verglasung; (c) Messen einer an die elektrochrome Verglasung angelegten tatsächlichen Spannung; (d) Berechnen eines Drahtwiderstands des Systems; und (e) Anpassen nachfolgend angelegter Spannungen basierend auf dem berechneten Drahtwiderstand.

13. Verfahren nach Anspruch 12, wobei mindestens eins der Folgenden gilt:

die tatsächliche Spannung wird von der Identifikationsschaltung gemessen; die Identifikationsschaltung überträgt gespeicherte Parameter an das Steuersystem und der Drahtwiderstand und die gespeicherten Parameter werden in einem Speicher des Steuersystems gespeichert.

**14.** Verfahren nach Anspruch 11, das ferner das Auslegen des Steuersystems in Reaktion auf die aus der Identifikationsschaltung abgerufenen Informationen umfasst.

**Revendications**

**1.** Système de modulation de la transmission de lumière, le système comprenant :

un dispositif électrochromique comprenant un vitrage électrochromique et un circuit d'identification qui enregistre des informations concernant au moins certaines propriétés du dispositif électrochromique ou ses exigences en termes de commande ; et
un système de commande configuré pour accéder aux informations enregistrées dans le circuit d'identification et pour utiliser les informations auxquelles on a accédé pour appliquer une tension et/ou une intensité appropriée au dispositif électrochromique,
**caractérisé en ce que** le circuit d'identification est en communication bidirectionnelle avec ledit système de commande.

**2.** Système selon la revendication 1, dans lequel l'information enregistrée par le circuit d'identification est une propriété physique dudit vitrage électrochromique.

**3.** Système selon la revendication 1, dans lequel les informations stockées par le circuit d'identification sont un numéro de modèle de produit, un numéro de série de produit, une date de fabrication, une forme de vitrage, une taille de vitrage, une aire de surface de vitrage, des matériaux constitutifs du vitrage, un nombre et une dimension de segments de vitrage indépendamment réglables, ou un emplacement d'installation de vitrage.

**4.** Système selon la revendication 1, dans lequel l'information enregistrée par le circuit d'identification est une propriété opérationnelle choisie dans l'ensemble constitué d'une tension ou d'une intensité.

**5.** Système selon la revendication 1, dans lequel les informations stockées par le circuit d'identification sont une tension de commutation, une intensité de coloration, une intensité de clarification, une intensité de fuite, une vitesse de commutation, ou sont choisies dans l'ensemble constitué de résistance en série interne, de paramètres de commande, de propriétés électriques et de niveau minimal et maximal de coloration avec des tensions correspondantes de maintien.

**6.** Système selon la revendication 1, dans lequel ledit circuit d'identification est configuré pour suivre une tension dudit vitrage electrochromique ou pour mesurer une température, ou pour mesurer des niveaux de lumière.

**7.** Système selon la revendication 1, dans lequel ledit circuit d'identification est configuré pour suivre une tension dudit vitrage electrochromique et où ledit système de commande est configuré pour calculer une résistance de fil à partir de ladite tension suivie.

**8.** Système selon la revendication 1, dans lequel ledit circuit d'identification comprend un microcontrôleur.

**9.** Système selon la revendication 1, dans lequel ledit circuit d'identification partage des fils avec ledit vitrage électrochromique et dans lequel ledit système de commande est configuré pour envoyer des informations audit circuit d'identification par modulation de ladite tension appliquée.

**10.** Système selon la revendication 1, dans lequel ledit circuit d'identification est intégré à un connecteur électrique ou intégré à un joint externe dudit vitrage électrochromique ou est directement attaché à au moins une barre de bus dudit vitrage électrochromique.

**11.** Procédé de commande d'un vitrage électrochromique d'un dispositif électrochromique comprenant un vitrage électrochromique et un circuit d'identification qui enregistre des informations concernant au moins certaines des propriétés du dispositif électrochromique ou ses exigences en matière de commande, le procédé comprenant un système de commande :

qui accède aux informations stockées dans le circuit d'identification du dispositif électrochromique ; et
qui utilise les informations obtenues pour appliquer une tension et/ou une intensité appropriées au dispositif électrochromique,
**caractérisé en ce que** le circuit d'identification est en communication bidirectionnelle avec ledit système de commande.

12. Procédé selon la revendication 11, comprenant en outre : (a) le réglage dudit vitrage électrochromique à un état clair ; (b) l'application d'une tension prédéfinie audit vitrage électrochromique ; (c) la mesure d'une tension réelle appliquée audit vitrage électrochromique ; (d) le calcul d'une résistance de fil dudit système ; et (e) l'ajustement des tensions consécutivement appliquées en fonction de ladite résistance de fil calculée.

13. Procédé selon la revendication 12, dans lequel on a au moins l'une des choses suivantes :

ladite tension réelle est mesurée par ledit circuit d'identification ;
ledit circuit d'identification transmet les paramètres stockés audit système de commande, et
ladite résistance de fil et lesdits paramètres stockés sont stockés dans une mémoire dudit système de commande.

14. Procédé selon la revendication 11, comprenant en outre la configuration du système de commande en réponse aux informations obtenues à partir du circuit d'identification.

FIG. 1

## FIG. 2

# FIG. 3

EP 2 699 961 B1

FIG. 4

FIG. 5

Normal solder locations

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080169185 A

- EP 2161615 A1